# EUROPEAN PATENT APPLICATION

(11) **EP 4 647 951 A1**
(43) Date of publication of application: **12.11.2025**
(21) Application number: 23920817.6
(22) Date of filing: 21.11.2023
(51) Int. Cl.: G06F 21/60

(54) **METHOD AND APPARATUS FOR MANAGING CONTAINER DATA**

(30) Priority: 09.02.2023 CN 202310092819
(71) Applicant: Huawei Cloud Computing Technologies Co., Ltd., Guiyang, Guizhou 550025 (CN)
(72) Inventor: WEI, Yuke, Guiyang, Guizhou 550025 (CN); ZHAO, Dong, Guiyang, Guizhou 550025 (CN)
(74) Representative: Pfenning, Meinig & Partner mbB
(86) International application number: PCT/CN2023/132845
(87) International publication number: WO 2024/164625

(57) **Abstract**

Embodiments of this application relate to the cloud computing field, and provide a method and an apparatus for managing container data. The method is applied to a cloud management platform, the cloud management platform is configured to manage a plurality of container management clusters providing a container service, the cloud management platform includes a key management component, and the key management component is configured to split a key. The method includes: encrypting first data based on a first key, to generate first data ciphertext, where the first data is data to be deployed to a target container; splitting the first key based on the key management component, to generate a first key shard; and deploying the first data ciphertext and the first key shard to a host machine to which the target container belongs. In the method, after the data is encrypted, the key is sharded by using the key management component, so that data sent to an operating system of the host machine in which the container is located cannot be decrypted without the key management component, thereby enhancing security of the data in the container.

## Description

This application claims priority to Chinese Patent Application No. 202310092819.4, filed with the China National Intellectual Property Administration on February 9, 2023 and entitled "METHOD AND APPARATUS FOR MANAGING CONTAINER DATA", which is incorporated herein by reference in its entirety.

### TECHNICAL FIELD

Embodiments of this application relate to the cloud computing field, and more specifically, to a method and an apparatus for managing container data.

### BACKGROUND

With development of cloud computing technologies, containerization is gradually becoming the latest technology trend in the cloud computing field. Containerization is a form of operating system virtualization technology that allows users to run applications in isolated user space using a same shared operating system. Therefore, a container technology has advantages over a virtual machine technology, such as resource saving, flexible deployment, easy scalability, and simplified operations.

However, due to a characteristic that containers share an operating system, when an operating system of a host machine of the containers is attacked, the containers lack an effective data protection measure. Consequently, there is a security risk in protection of sensitive data inside the containers. Therefore, how to improve security of data in the containers becomes a technical problem to be resolved urgently.

### SUMMARY

Embodiments of this application provide a method and an apparatus for managing container data. With reference to a native capability of a container scenario, a key management component may be configured to implement persistent encrypted storage of data in a container in an operating system of a host machine, thereby enhancing security of the data in the container.

According to a first aspect, a method for managing container data is provided. The method is applied to a cloud management platform, the cloud management platform is configured to manage a plurality of container management clusters providing a container service, the cloud management platform includes a key management component, and the key management component is configured to split a key. The method includes: encrypting first data based on a first key, to generate first data ciphertext, where the first data is data to be deployed to a target container; splitting the first key based on the key management component, to generate a first key shard; and deploying the first data ciphertext and the first key shard to a host machine to which the target container belongs.

According to the technical solution provided in this application, after a data deployment tool encrypts the data, the key is sharded by using the key management component, so that data sent to an operating system of the host machine in which the container is located cannot be decrypted without the key management component, thereby enhancing security of the data in the container.

With reference to the first aspect, in some implementations of the first aspect, the target container includes a first application and a second application, and the first data is data used by the first application. The method further includes: encrypting second data based on a second key, to generate second data ciphertext, where the second data is data used by the second application; splitting the second key based on the key management component, to generate a second key shard; and deploying the second data ciphertext and the second key shard to the host machine to which the target container belongs.

According to the foregoing technical solution, different keys are provided for data of different applications, and key shards are separately sent to the host machine in which the container is located, so that the keys used by the different applications in the container to decrypt data are isolated from each other, thereby further enhancing security of the data in the container.

With reference to the first aspect, in some implementations of the first aspect, the key management component is further configured to synthesize key shards, and the method further includes: obtaining a third key; obtaining the first data ciphertext and the first key shard; obtaining the first data based on the key management component, the first data ciphertext, and the first key shard; and encrypting the first data based on the third key, to generate third data ciphertext.

According to the foregoing technical solution, the key management component decrypts plaintext data in the data deployment tool, re-encrypts the plaintext data by using an updated key, and sends, according to a requirement, new ciphertext data and the key shard to the host machine in which the container is located. In this way, key updating and upgrading can be completed without being perceived by an application in the container, thereby further enhancing security of the data in the container.

With reference to the first aspect, in some implementations of the first aspect, splitting the first key based on the key management component, to generate the first key shard includes: generating a first root key; encrypting the first key based on the first root key, to generate first key ciphertext; and splitting the first root key using the key management component, to generate the first key shard. Deploying the first data ciphertext and the first key shard to the host machine to which the target container belongs includes: deploying the first data ciphertext, the first key ciphertext, and the first key shard to the host machine to which the target container belongs.

According to the foregoing technical solution, the key management component encrypts the key using the root key, and sends a sharded root key to the host machine in which the container is located, so that two-layer encryption for important data can be implemented, thereby enhancing security of key storage and further enhancing security of the data in the container.

With reference to the first aspect, in some implementations of the first aspect, deploying the first data ciphertext and the first key shard to the host machine to which the target container belongs includes: coding the first data ciphertext and the first key shard in a coding scheme that represents binary data (base64) based on 64 printable characters; and deploying the coded first data ciphertext and the coded first key shard to the host machine to which the target container belongs.

According to the foregoing technical solution, ciphertext data and the key shard are coded and then transmitted, thereby improving data transmission efficiency while enhancing security in a data transmission process.

With reference to the first aspect, in some implementations of the first aspect, the method further includes: generating the first key based on an encryption parameter specified by a user.

According to the foregoing technical solution, a specified key is generated based on the encryption parameter, so that different encryption requirements of different users can be met, thereby improving use experience of the user.

With reference to the first aspect, in some implementations of the first aspect, the encryption parameter includes at least one of the following: an encryption mode, an encryption algorithm, and a key length.

According to the foregoing technical solution, different encryption algorithms can be determined based on different encryption parameters, thereby enriching application scenarios of container data encryption.

According to a second aspect, a method for managing container data is provided. The method is executed by a target container running on a host machine, the target container includes a key management component, the key management component is configured to synthesize key shards, and the method includes: obtaining first data ciphertext and a first key shard from the host machine; performing synthesis on the first key shard based on the key management component, to generate a first key; and decrypting the first data ciphertext based on the first key, to generate first data.

According to the technical solution provided in this application, the key is synthesized in the container by using the key management component, so that ciphertext data stored in the operating system of the host machine can be decrypted and used by the container. Therefore, the data in the container may be encrypted and stored in the operating system of the host machine, thereby enhancing security of the data used by the container.

With reference to the second aspect, in some implementations of the second aspect, the target container includes a first application and a second application, and the method further includes: obtaining second data ciphertext and a second key shard from the host machine; performing synthesis on the second key shard based on the key management component, to generate a second key; decrypting the second data ciphertext based on the second key, to generate second data; and applying the first data to the first application, and applying the second data to the second application.

According to the foregoing technical solution, data of different applications is synthesized and different keys are used, so that keys used by different applications in the container to decrypt the data are isolated from each other, thereby further enhancing security of the data used by the container.

With reference to the second aspect, in some implementations of the second aspect, the method further includes: obtaining first key ciphertext from the host machine. Performing synthesis on the first key shard based on the key management component, to generate the first key includes: performing synthesis on the first key shard using the key management component, to generate a first root key; and decrypting the first key ciphertext based on the first root key, to generate the first key.

According to the foregoing technical solution, the key management component first synthesizes the root key, uses the root key for decryption to generate the key, and then uses the key to decrypt the data, thereby enhancing key security and further enhancing security of the data used by the container.

According to a third aspect, an apparatus for managing container data is provided. The apparatus includes a key management component, the key management component is configured to split a key, and the apparatus includes: an encryption module, configured to encrypt first data based on a first key, to generate first data ciphertext, where the first data is data to be deployed to a target container; a key management module, configured to split the first key based on the key management component, to generate a first key shard; and a deployment module, configured to deploy the first data ciphertext and the first key shard to a host machine to which the target container belongs.

With reference to the third aspect, in some implementations of the third aspect, the target container includes a first application and a second application, and the first data is data used by the first application. The encryption module is further configured to encrypt second data based on a second key, to generate second data ciphertext. The second data is data used by the second application. The key management module is further configured to split the second key based on the key management component, to generate a second key shard. The deployment module is further configured to deploy the second data ciphertext and the second key shard to the host machine to which the target container belongs.

With reference to the third aspect, in some implementations of the third aspect, the key management component is further configured to synthesize key shards, and the apparatus further includes an obtaining module, configured to: obtain a third key; and obtain the first data ciphertext and the first key shard. The key management module is further configured to obtain the first data based on the key management component, the first data ciphertext, and the first key shard. The encryption module is further configured to encrypt the first data based on the third key, to generate third data ciphertext.

With reference to the third aspect, in some implementations of the third aspect, the key management module is configured to: generate a first root key; encrypt the first key based on the first root key, to generate first key ciphertext; and split the first root key using the key management component, to generate the first key shard. The deployment module is configured to deploy the first data ciphertext, the first key ciphertext, and the first key shard to the host machine to which the target container belongs.

With reference to the third aspect, in some implementations of the third aspect, the deployment module is configured to: code the first data ciphertext and the first key shard in a coding scheme that represents binary data (base64) based on 64 printable characters; and deploy the coded first data ciphertext and the coded first key shard to the host machine to which the target container belongs.

With reference to the third aspect, in some implementations of the third aspect, the encryption module is further configured to generate the first key based on an encryption parameter specified by a user.

With reference to the third aspect, in some implementations of the third aspect, the encryption parameter includes at least one of the following: an encryption mode, an encryption algorithm, and a key length.

According to a fourth aspect, an apparatus for managing container data is provided. The apparatus runs on a host machine, the apparatus includes a key management component, the key management component is configured to synthesize key shards, and the apparatus includes: an obtaining module, configured to obtain first data ciphertext and a first key shard from the host machine; a key management module, configured to perform synthesis on the first key shard based on the key management component, to generate a first key; and a decryption module, configured to decrypt the first data ciphertext based on the first key, to generate first data.

With reference to the fourth aspect, in some implementations of the fourth aspect, the apparatus includes a first application and a second application, and the apparatus further includes an application module. The obtaining module is further configured to obtain second data ciphertext and a second key shard from the host machine. The key management module is further configured to perform synthesis on the second key shard based on the key management component, to generate a second key. The decryption module is further configured to decrypt the second data ciphertext based on the second key, to generate second data. The application module is configured to apply the first data to the first application, and apply the second data to the second application.

With reference to the fourth aspect, in some implementations of the fourth aspect, the obtaining module is further configured to obtain first key ciphertext from the host machine. The key management module is configured to: perform synthesis on the first key shard using the key management component, to generate a first root key; and decrypt the first key ciphertext based on the first root key, to generate the first key.

According to a fifth aspect, a computing device is provided, including a processor and a memory. The memory is configured to store instructions, and the processor is configured to invoke the instructions from the memory and run the instructions, so that the computing device performs the method according to any one of the first aspect or the possible implementations of the first aspect.

According to a sixth aspect, a computing device is provided, including a processor and a memory. The memory is configured to store instructions, and the processor is configured to invoke the instructions from the memory and run the instructions, so that the computing device performs the method according to any one of the second aspect or the possible implementations of the second aspect.

According to a seventh aspect, a computing device cluster is provided, including at least one computing device. Each computing device includes a processor and a memory. The memory is configured to store instructions, and the processor is configured to invoke the instructions from the memory and run the instructions, so that the computing device cluster performs the method according to any one of the first aspect or the possible implementations of the first aspect.

According to an eighth aspect, a computing device cluster is provided, including at least one computing device. Each computing device includes a processor and a memory. The memory is configured to store instructions, and the processor is configured to invoke the instructions from the memory and run the instructions, so that the computing device cluster performs the method according to any one of the second aspect or the possible implementations of the second aspect.

Optionally, the processor may be a general purpose processor, and may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in the memory. The memory may be integrated into the processor, or may be located outside the processor and exist independently.

According to a ninth aspect, a chip is provided. The chip obtains instructions and executes the instructions to implement the method according to any one of the first aspect or the implementations of the first aspect.

According to a tenth aspect, a chip is provided. The chip obtains instructions and executes the instructions to implement the method according to any one of the second aspect or the possible implementations of the second aspect.

Optionally, in an implementation, the chip includes a processor and a data interface. The processor reads, through the data interface, instructions stored in a memory, to perform the method according to any one of the first aspect or the possible implementations of the first aspect.

Optionally, in an implementation, the chip may further include the memory. The memory stores the instructions. The processor is configured to execute the instructions stored in the memory. When the instructions are executed, the processor is configured to perform the method according to any one of the first aspect or the possible implementations of the first aspect.

According to an eleventh aspect, a computer program product including instructions is provided. When the instructions are run by a computing device cluster, the computing device cluster is enabled to perform the method according to any one of the first aspect or the possible implementations of the first aspect.

According to a twelfth aspect, a computer program product including instructions is provided. When the instructions are run by a computing device cluster, the computing device cluster is enabled to perform the method according to any one of the second aspect or the possible implementations of the second aspect.

According to a thirteenth aspect, a computer-readable storage medium is provided, including computer program instructions. When the computer instructions are executed by a computing device cluster, the computing device cluster performs the method according to any one of the first aspect or the possible implementations of the first aspect.

According to a fourteenth aspect, a computer-readable storage medium is provided, including computer program instructions. When the computer instructions are executed by a computing device cluster, the computing device cluster performs the method according to any one of the second aspect or the possible implementations of the second aspect.

For example, the computer-readable storage medium includes but is not limited to one or more of the following: a read-only memory (read-only memory, ROM), a programmable ROM (programmable ROM, PROM), an erasable PROM (erasable PROM, EPROM), a flash memory, an electrically EPROM (electrically EPROM, EEPROM), and a hard disk drive (hard disk drive).

Optionally, in an implementation, the foregoing storage medium may be specifically a non-volatile storage medium.

### BRIEF DESCRIPTION OF DRAWINGS

FIG. 1 is a diagram of a structure of a container system;
FIG. 2 is a diagram of a system in the cloud field to which a method is applied according to an embodiment of this application;
FIG. 3 is a flow block diagram of a method for managing container data according to an embodiment of this application;
FIG. 4 is a flow block diagram of another method for managing container data according to an embodiment of this application;
FIG. 5 is a flow block diagram of another method for managing container data according to an embodiment of this application;
FIG. 6 is a flow block diagram of another method for managing container data according to an embodiment of this application;
FIG. 7 is a block diagram of a structure of an apparatus for managing container data according to an embodiment of this application;
FIG. 8 is a block diagram of a structure of another apparatus for managing container data according to an embodiment of this application;
FIG. 9 is a block diagram of a structure of a computing device according to an embodiment of this application;
FIG. 10 is a block diagram of a structure of another computing device according to an embodiment of this application;
FIG. 11 is a block diagram of a structure of a computing device cluster according to an embodiment of this application;
FIG. 12 is a block diagram of a structure of another computing device cluster according to an embodiment of this application; and
FIG. 13 is a block diagram of a structure of another computing device cluster according to an embodiment of this application.

### DESCRIPTION OF EMBODIMENTS

The following describes technical solutions of embodiments in this application with reference to accompanying drawings.

Each aspect, embodiment, or feature is presented in this application with reference to a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, the terms such as "example" or "for example" are used to represent giving an example, an illustration, or a description. Any embodiment or design scheme described as an "example" in this application should not be explained as being more preferred or having more advantages than another embodiment or design scheme. To be precise, the term "example" is used to represent a concept in a specific manner.

In embodiments of this application, "relevant (corresponding, relevant)" and "corresponding (corresponding)" may sometimes be mixed. It should be noted that meanings to be expressed by the two are consistent when a difference between them is not emphasized.

A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of the network architecture and emergence of a new service scenario, the technical solutions provided in embodiments of this application are also applicable to similar technical problems.

Reference to "an embodiment", "some embodiments", or the like described in this specification indicates that one or more embodiments of this application include a specific feature, structure, or characteristic described with reference to embodiments. Therefore, statements such as "in an embodiment", "in some embodiments", "in some other embodiments", and "in other embodiments" that appear at different places in this specification do not necessarily refer to a same embodiment. Instead, the statements mean "one or more but not all of embodiments", unless otherwise specifically emphasized in another manner. The terms "include", "have", and their variants all mean "including but not limited to", unless otherwise specifically emphasized in another manner.

In this application, "at least one" means one or more, and "a plurality of" means two or more. The term "and/or" describes an association relationship for describing associated objects and represents that three relationships may exist. For example, A and/or B may represent the following cases: Only A exists, both A and B exist, and only B exists, where A and B may be singular or plural. The character "/" usually indicates an "or" relationship between the associated objects. "At least one of the following items" or a similar expression thereof refers to any combination of these items, including a singular item or any combination of plural items. For example, at least one of a, b, or c may represent a, b, c, a and b, a and c, b and c, or a, b, and c, where a, b, and c may be singular or plural.

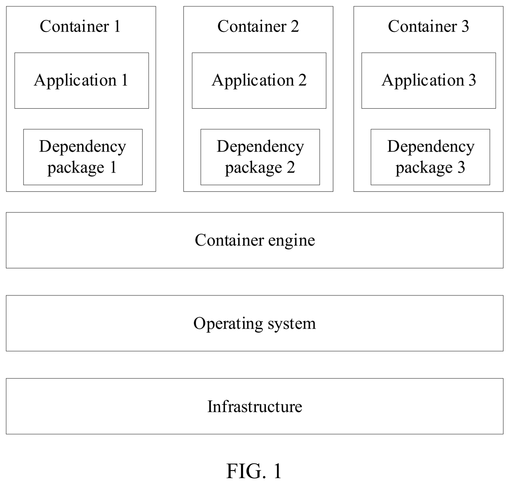

For ease of understanding, the following first describes related terms and concepts that may be used in embodiments of this application.
1. Container: The container utilizes namespace (namespace) and control group (cgroup) technologies supported by a kernel of an operating system, to isolate an application process and its dependency package (for example, a file required for running an application, such as a running environment (bins/libs)) in an independent running environment. For details, refer to a diagram of a structure of a container system shown in FIG. 1.

An infrastructure may be hardware of a server, or a virtual machine on a cloud (that is, a container may also be deployed in the virtual machine). An operating system may use, for example, a Linux kernel, and supports namespaces and cgroups. The namespaces are used to implement isolation between processes, and the cgroups are used to implement resource allocation. A resource may include a virtual processor (vcpu) and a memory that are allocated to the process.

A container engine is similar to a virtual machine manager and runs in an operating system to manage a container.

An application running in a container may be software, a service, a microservice, or any computer program having an independent function. It should be understood that a case shown in FIG. 1 is merely an example. At least one application may run in a container. For example, two different microservices may run in a same container at the same time.

2. Tool node: The tool node is a tool, for example, a deployment tool or a script, provided for a user to manage data in a container. The tool node provides a user interface (UI) or command-line interface, so that the user can manage the container and the data in the container. The tool node can obtain or generate data based on an instruction input by the user through the UI or the command-line interface, and deploy the data to a management node in a container management cluster. Then, the management node delivers the data to a corresponding worker node, so that the data is deployed to the container.

When the container management cluster is deployed in a cloud system, the tool node may also be referred to as a cloud management platform, and is configured to manage a plurality of container management clusters providing a container service. The cloud management platform further provides other interfaces to connect to other cloud services for expanding functions of the container management cluster, including but not limited to: a container runtime interface (container runtime interface, CRI), which provides computing resources and isolates differences between container engines, thereby enabling interaction with various container engines through a unified interface; a container network interface (container network interface, CNI), which provides network resources so that the container management cluster can support different network environments, such as a virtual private cloud (virtual private cloud, VPC); and a container storage interface (container storage interface, CSI), which provides storage resources so that the container management cluster supports various types of storage, such as block storage (elastic volume service, EVS), file storage (scalable file service, SFS), and object storage (object storage service, OBS). In another solution, the cloud management platform may also be referred to as a container management platform, a cloud container management platform, or the like.

3. Management node: The management node is a node that dynamically deploys containers in a container management cluster. For example, the management node may create or delete a worker node according to an instruction of a tool node, and dynamically assign a task to each worker node. The management node can also send data deployed by the tool node to a storage directory specified by each worker node, so that after being created on the worker node, the container can mount corresponding data through the specified directory, thereby deploying the data to a target container.

The management node can use an etcd system to manage important sensitive data (such as a password and a key) in the container. etcd is an open-source and distributed key-value pair data storage system, and provides functions such as shared configuration and service registration and discovery.

4. Worker node: The worker node is a server or a virtual machine that runs a container, and may also be referred to as a host machine of the container. After receiving container data delivered by a management node, the worker node stores the data in a specified directory, so that a container running on the worker node can mount and use required data through the specified directory. The worker node specifies different directories for each container, so that data in the container can be isolated from each other.

Cloud native is a development direction of cloud computing technologies, and is a method for constructing and running an application based on cloud computing technologies. Applications in a cloud native architecture are divided into a large quantity of microservices based on functions, improving flexibility and maintainability. After the microservices are decoupled, they can be deployed in independent containers. Agile methodologies, and development and operations (development and operations, DevOps) support continuous iteration and operation automation. Cloud platform facilities are used to implement elastic scaling, dynamic scheduling, and optimization of resource utilization.

A container has advantages over a virtual machine, such as resource saving, flexible deployment, easy scalability, and simplified operations, and can better meet requirements for flexible deployment of an application or a microservice in a cloud native trend. Therefore, containerization is gradually becoming a development trend of operating system virtualization technologies in the cloud computing field.

However, containerization also has a corresponding challenge. Because containers share an operating system, when an operating system of a host machine of the containers is attacked, the containers lack an effective data protection measure. For example, because data in the container is actually stored in a specified storage directory of the host machine, although sensitive data such as a password or a private key in the container can be stored in a ciphertext form on a management node, the sensitive data can be stored only in a plaintext form on a worker node to which the container belongs. As a result, once the operating system of the host machine is attacked, all containers on the host machine may be damaged, and the containers lack an effective protection measure for the data.

In view of this, an embodiment of this application provides a method for managing container data. A tool node encrypts data by using a key management component, shards a key used for encryption, and deploys the encrypted data and a key shard to a storage path of a worker node. A host machine normally stores the received data still in a plaintext data manner. However, because the data is encrypted, even if an operating system of the host machine is attacked, data security can still be ensured when the key cannot be synthesized, thereby enhancing security of the data in the container.

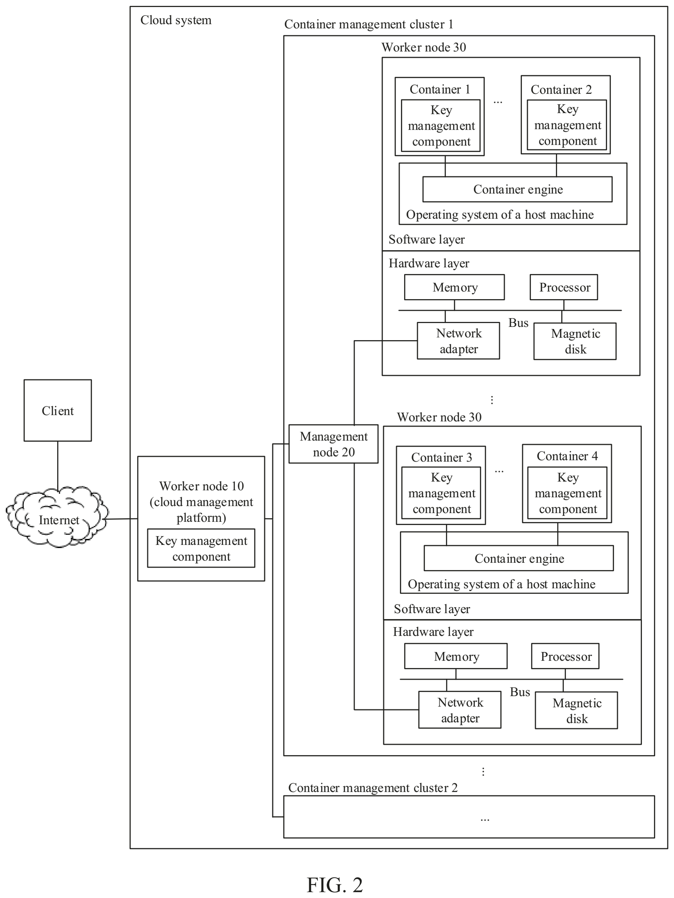

To better understand the solutions in embodiments of this application, the following describes the methods provided in embodiments of this application with reference to FIG. 2 to FIG. 4.

The method may be applied to a cloud scenario. FIG. 2 is a diagram of an application scenario of a method for managing container data in the cloud scenario according to this application. As shown in FIG. 2, a cloud system includes a cloud management platform, and the cloud management platform may be used as a tool node 10 in a system for managing container data provided in this embodiment of this application. The cloud management platform is configured to manage a plurality of container management clusters providing a container service, and each container management cluster includes at least one management node 20 and at least one worker node 30.

The tool node 10 receives, by providing a user interface (UI) or a command-line interface, a container management instruction sent by a client of a user over the Internet. According to the management instruction for the container, the tool node 10 can obtain data and deploy the data to the management node 20, so that the management node 20 distributes the data to the worker node 30 on which the container is located. The tool node 10 includes a key management component, and the key management component can split a key used for encryption into a key shard, or combine a key shard into a key for decryption.

The management node 20 is configured to receive and store the data sent by the tool node 10, and distribute the data to the worker node 30. For example, the management node 20 may store sensitive data generated by the tool node 10. When a container is created, the sensitive data is sent, by using an internal network of a data center, to the worker node 30 on which the container is located and is stored to a specified path, so that after being started, the container can mount the foregoing data from the specified path of the worker node 30.

The worker node 30 may be a server in a data center or a virtual machine running on a server. Each worker node 30 may run a plurality of containers, and each container may include at least one application (not shown in the figure). The container further includes a same key management component as that in the tool node 10, so that the container can obtain a key used by the tool node 10 to encrypt data, thereby enabling decryption of the mounted data.

The following uses the cloud scenario shown in FIG. 2 as an example to separately describe in detail a data encryption method of the tool node and a data decryption method of the container.

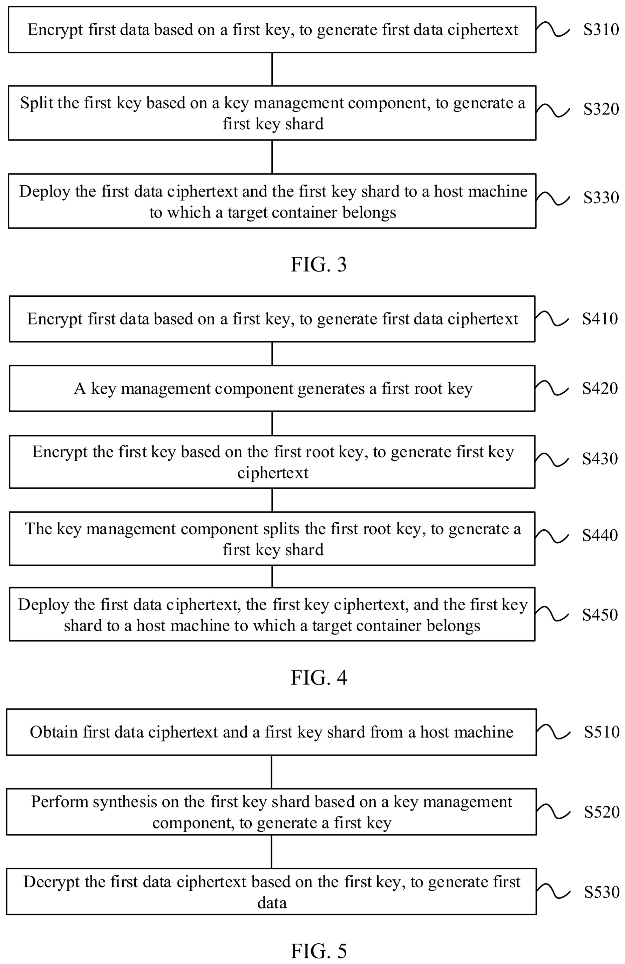

FIG. 3 is a schematic flowchart of a method for managing container data according to an embodiment of this application. Optionally, the method in FIG. 3 may be performed by the tool node 10 in FIG. 2.

As shown in FIG. 3, the method includes the following steps.

S310: Encrypt first data based on a first key, to generate first data ciphertext.

For example, in step S310, the tool node 10 may obtain data that needs to be allocated to the container and a key used for encrypting the data, and encrypt the data by using the key, to convert data plaintext into data ciphertext. As an example rather than a limitation, the tool node 10 may generate, when a user creates a container, sensitive data (for example, a password or a private key) required for managing the container. Alternatively, the tool node 10 may receive, when the user needs to write data into the container, data uploaded by the user, or obtain, in any other manner, any data that needs to be deployed in the container. This is not specifically limited in this application.

Optionally, the key used for data encryption may be received by the tool node 10 from another device. For example, the tool node 10 may receive, through a UI interface or a command-line interface, a key uploaded through a client by the user, and the tool node 10 may also receive, over the Internet, a key sent by another computing device or another computing device cluster. In this way, calculation complexity of the tool node can be reduced and efficiency can be improved. In addition, the user can use any key, which enriches applicable scenarios and improves use experience of the user.

Optionally, the key used for data encryption may be generated by the tool node 10. For example, the tool node 10 may generate a key based on an encryption parameter specified by the user. The encryption parameter includes but is not limited to an encryption mode, an encryption algorithm, a key length, and the like. The encryption algorithm indicates a manner of converting plaintext into ciphertext, and may include a symmetric encryption algorithm such as a data encryption standard (data encryption standard, DES), an advanced encryption standard (advanced encryption standard, AES), or commercial cryptography 4 (commercial cryptography 4, SM4). That is, a same key is used for encryption and decryption. The encryption mode indicates a manner of converting plaintext greater than a data block size into ciphertext by repeatedly using an encryption algorithm, and may include an electronic codebook (electronic codebook, ECB) mode, a cipher-block chaining (cipher-block chaining, CBC) mode, a propagating/plaintext cipher-block chaining (propagating cipher-block chaining, PCBC) mode, a cipher feedback (cipher feedback, CFB) mode, an output feedback (output feedback, OFB) mode, a counter (counter mode, CTR) mode, and the like. The key length indicates a quantity of bits of the key used for encryption and is usually related to a selected encryption algorithm. The tool node 10 can generate, according to an encryption algorithm, an encryption mode, and/or a key length specified by the user, a key that meets a user requirement. In this way, different encryption requirements of different users can be met, thereby enriching application scenarios of container data encryption and improving user experience the user.

Optionally, the encryption algorithm and the encryption mode used for encryption may be pre-configured by the tool node 10. Optionally, the encryption algorithm and the encryption mode used for encryption may alternatively be determined by the tool node 10 based on an encryption parameter input by the user.

S320: Split the first key based on the key management component, to generate a first key shard.

For example, in step S320, the tool node 10 may use a built-in key management component to split the key into key shards. As an example, the key management component may split the key based on a specific threshold. The key management component of the tool node 10 determines a key splitting manner based on parameters such as a quantity of key shards, a length of each key shard, and algorithms of the key shards, and the key management component in the container uses a same parameter, so that the key shards after sharding can be synthesized into the key in the container.

Optionally, the key shard may be in a form of plaintext data. The key management component is required for synthesizing the key shards into the key. Therefore, in operating systems of a management node 20 and a worker node 30 that do not include the key management component, the key shards stored in a plaintext form cannot obtain a key required for decryption. This ensures storage security of container data in the operating systems of the management node 20 and the worker node 30.

S330: Deploy the first data ciphertext and the first key shard to a host machine to which a target container belongs.

For example, in step S330, the tool node 10 may write the data ciphertext and the key shard into the management node 20, so that the management node 20 stores the data ciphertext and the key shard and sends the data ciphertext and the key shard to a specified directory of the worker node 30. That is, the data ciphertext and the key shard are deployed to the host machine to which the target container belongs. The tool node 10 and the management node 20 may be located in a same server or virtual machine. In this case, the tool node 10 directly stores the data ciphertext and the key shard in a storage device of the management node 20. The tool node 10 and the management node 20 may be located on different servers or virtual machines. In this case, the tool node 10 sends the data ciphertext and the key shard to the management node 20 by using a network.

A container cluster management system, Kubernetes, is used as an example. The tool node 10 may write the data ciphertext and the key shard into the management node 20 in a format of ConfigMaps. ConfigMaps are a data format in the Kubernetes system that stores data in a plaintext form. The data has been encrypted on the tool node 10 and the key shard can be synthesized only by the key management component. Therefore, the data and key shard output by the tool node can be transmitted and stored in a native data format of the container cluster management system while ensuring data security. It should be understood that the foregoing is described by using only a data format that stores data in a plaintext form in the container cluster management system as an example, and is not limited to the foregoing format. Any data format in the container cluster management system may be also used. For example, in the Kubernetes system, the tool node 10 may also write the data ciphertext and the key shard into the management node 20 in a format of Secrets. Data in the format of Secrets is stored in ciphertext on the management node and is stored in plaintext on the worker node, which further improves data security on the management node.

Optionally, the tool node 10 may code the data ciphertext and the key shard in a coding scheme that represents binary data (base64) based on 64 printable characters, and write the base64-coded data into the management node. The base64-coded data is easier to be transmitted using network protocols, thereby improving data transmission efficiency and security while enhancing security in a data transmission process.

According to the technical solution in this embodiment of this application, after the tool node encrypts the data, the key is sharded by using the key management component, so that data sent to an operating system of the worker node in which the container is located cannot be decrypted without the key management component, thereby enhancing security of the data in the container.

For step S320, to further improve data security, in some possible implementations, the key management component may be used to encrypt the key used for data encryption, and then generate key shards from a root key for encrypting the key.

In this case, FIG. 4 is a schematic flowchart of another method for managing container data according to an embodiment of this application. Optionally, the method in FIG. 4 may be performed by the tool node 10 in FIG. 2.

As shown in FIG. 4, the method includes the following steps.

S410: Encrypt first data based on a first key, to generate first data ciphertext.

Optionally, for specific implementations of step S410, refer to related descriptions of the corresponding step S310 in the foregoing embodiment. Details are not described herein again.

S420: A key management component generates a first root key.

For example, in step S420, the tool node 10 may generate, by using the key management component, the root key used to encrypt the key. Because the key used by the tool node 10 to encrypt data may be obtained from another device, there is also a risk that the key itself may be stolen. Therefore, the root key may be generated on the tool node 10 to encrypt the key, to ensure security of the key.

S430: Encrypt the first key based on the first root key, to generate first key ciphertext.

For example, in step S430, the tool node 10 may encrypt the key by using the first root key, to convert key plaintext into key ciphertext, thereby implementing layered encryption of data.

S440: The key management component splits the first root key, to generate a first key shard.

For example, in step S440, the tool node 10 may use a built-in key management component to split the root key into key shards. For example, the key management component may split the root key based on a specific threshold. For a specific splitting manner, refer to related descriptions of key splitting in step S320. Details are not described herein again.

S450: Deploy the first data ciphertext, the first key ciphertext, and the first key shard to a host machine to which a target container belongs.

For example, in step S450, the tool node 10 may write the data ciphertext, the key ciphertext, and the key shard into a management node 20, so that the management node 20 stores and sends the data ciphertext, the key ciphertext, and the key shard to a specified directory of a worker node 30. Optionally, the data ciphertext, the key ciphertext, and the key shard may be written into the management node 20 after being coded based on base64. Optionally, for a specific transmission and storage manner of the foregoing data, refer to related descriptions of step S330. Details are not described herein again.

According to the technical solution in this embodiment of this application, the key management component encrypts the key using the root key, and sends a sharded root key to the worker node, so that two-layer encryption for important data can be implemented, thereby enhancing security of key storage and further enhancing security of the data in the container.

For the two data encryption manners shown in FIG. 3 and FIG. 4, the data obtained by the tool node 10 may be used by different applications. Different applications may be different applications in a same container, or may be applications in different containers. For data of different applications, the tool node 10 may obtain different keys, to encrypt the data of the different applications by using the different keys, thereby implementing key isolation between applications. It should be understood that the application and a first application and a second application described below all refer to computer programs in a broad sense, and may include software, a service, a microservice, or any computer program having an independent function.

In this case, in some possible implementations, the data obtained by the tool node 10 may include first data and second data, and the obtained key may include the first key and a second key. The first data is data used by the first application, and the second data is data used by the second application. The tool node 10 may encrypt the first data using the first key to generate first ciphertext data, and encrypt the second data using the second key to generate second ciphertext data; split the first key into the first key shard using the key management component, and split the second key into a second key shard; and separately write the first data ciphertext and the first key shard, and the second data ciphertext and the second key shard into the management node 20 for transmission to the worker node 30 to which the container belongs. For specific encryption, key sharding, and data deployment manners, refer to descriptions of steps S310 to S330 or steps S410 to S450 in the foregoing methods. Details are not described herein again.

According to the technical solution in this embodiment of this application, different keys are provided for data of different applications, and key shards are separately sent to the worker node in which the container is located, so that the keys used by the different applications in the container to decrypt data are isolated from each other, thereby further enhancing security of the data in the container.

For the two data encryption manners shown in FIG. 3 and FIG. 4, the tool node 10 may update the deployed ciphertext data and the key without being aware of the application in the container, thereby implementing key rotation.

In this case, in some possible implementations, after the tool node 10 has written the first data ciphertext and the first key shard into the management node for transmission to the worker node to which the target container belongs, the tool node 10 may further obtain a new third key, obtain the stored first data ciphertext and the first key shard from the management node 20, perform synthesis on the first key shard into the first key using the key management component, and decrypt the first data ciphertext using the first key, to obtain the first data. After obtaining the third key and the first data, the tool node 10 can encrypt the first data using the third key, and then shard the third key based on the key management component, to deploy a new key shard and the data encrypted using the new key to the management node 20 and the worker node 30, and replace the original first key shard and the first data ciphertext. Optionally, processes of using the new key for encryption, splitting the new key, and deploying the new data may be the same as the foregoing steps S310 to S330. When the application in the container requests data from a mounted address again, the application obtains updated data ciphertext and a corresponding key shard. This does not affect the application to obtain the required data. That is, the key is updated without being perceived by the application.

Optionally, the foregoing method may also be performed after the method shown in FIG. 4, that is, in a case in which the data is encrypted twice. In this case, the tool node 10 may obtain and store the first data ciphertext, the first key ciphertext, and the first key shard from the management node 20. Correspondingly, the tool node 10 may synthesize the key shard using the key management component to obtain the root key, implement decryption using the root key to obtain the key, and then implement decryption using the key to obtain the data. A subsequent encryption process may also be the same as the foregoing steps S410 to S450, and details are not described herein again.

According to the technical solution in this embodiment of this application, the key management component decrypts plaintext data in the tool node, re-encrypts the plaintext data by using an updated key, and sends, according to a requirement, new ciphertext data and the key shard to the worker node in which the container is located. In this way, key updating and upgrading can be completed without being perceived by an application in the container, thereby further enhancing security of the data in the container.

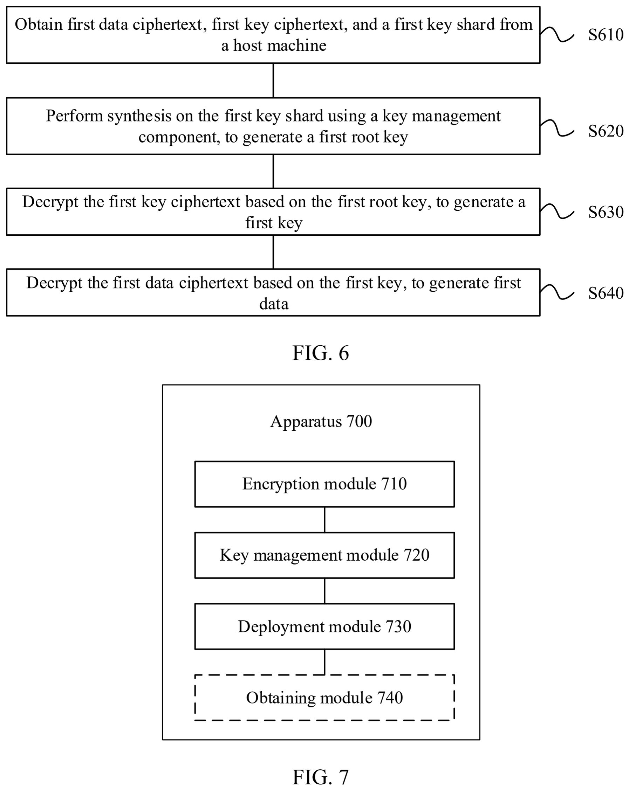

The foregoing describes a process in which the tool node encrypts the container data with reference to FIG. 3 and FIG. 4. The following describes a process in which the target container decrypts the container data with reference to FIG. 5 and FIG. 6.

FIG. 5 is a schematic flowchart of another method for managing container data according to an embodiment of this application. Optionally, a decryption method shown in FIG. 5 corresponds to an encryption method shown in FIG. 3. Optionally, the method in FIG. 5 may be performed by the container in FIG. 2.

As shown in FIG. 5, the method includes the following steps.

S510: Obtain first data ciphertext and a first key shard from a host machine.

For example, in step S510, the container can mount a specified directory of a worker node 30, to obtain data and a key shard that are stored in the worker node 30. Mounting means connecting a file system of the container to a specified storage directory of the host machine, so that an application in the container can read and write a file in the storage directory. When the application in the container requests first data, the container may read the first data ciphertext and the first key shard in the mounted directory into a memory of the container for processing. The first data ciphertext is data ciphertext obtained after the first data is encrypted by using a first key, and the first key shard is generated after the first key is split by a key management component on a tool node.

S520: Perform synthesis on the first key shard based on the key management component, to generate the first key.

For example, in step S520, the container can use a built-in key management component to synthesize key shards into a key. As an example, the key management component in the container is the same as the key management component in the tool node 10. Therefore, in a manner of splitting the key in the tool node 10, the key shards can be synthesized in a corresponding manner, to obtain a key required for decrypting data.

S530: Decrypt the first data ciphertext based on the first key, to generate the first data.

For example, in step S530, the container can decrypt the data ciphertext by using the key synthesized by the key management component, to obtain the data plaintext required by the application. The container decrypts the data requested by the application and provides the data to the application in a plaintext form, so that the application can use the data to perform a subsequent operation.

According to the technical solution in this embodiment of this application, the key is synthesized in the container by using the key management component, so that ciphertext data stored in an operating system of the worker node can be decrypted and used by the container. Therefore, the data in the container may be encrypted and stored in the operating system of the worker node, thereby enhancing security of the data used by the container.

In some possible implementations, the data stored on the worker node 30 is data that is encrypted twice, that is, stored in a manner of data ciphertext, key ciphertext, and a root key shard. In this case, FIG. 6 is a schematic flowchart of another method for managing container data according to an embodiment of this application. Optionally, a decryption method shown in FIG. 6 corresponds to an encryption method shown in FIG. 4. Optionally, the method in FIG. 6 may be performed by the container in FIG. 2.

As shown in FIG. 6, the method includes the following steps.

S610: Obtain first data ciphertext, first key ciphertext, and a first key shard from a host machine.

For example, in step S610, in addition to obtaining the data ciphertext and the key shard, the container can further obtain the key ciphertext stored in a worker node 30. Optionally, for a specific obtaining manner, refer to the foregoing descriptions of the manner of obtaining the data ciphertext and the key shard in S510.

S620: Perform synthesis on the first key shard using a key management component, to generate a first root key.

For example, in step S620, the container can use a built-in key management component to synthesize key shards into a root key. The root key is a key used by a tool node 10 to encrypt the key. As an example, the key management component in the container is the same as the key management component in the tool node 10. Therefore, in a manner of splitting the root key in the tool node 10, the key shards can be synthesized in a corresponding manner, to obtain the root key.

S630: Decrypt the first key ciphertext based on the first root key, to generate a first key.

For example, in step S630, the container can decrypt the key ciphertext by using the root key synthesized by the key management component, to obtain the key required for decrypting the data.

S640: Decrypt the first data ciphertext based on the first key, to generate first data.

For example, in step S640, the container can decrypt the data ciphertext by using the key in a plaintext form, to obtain the data plaintext required by the application.

According to the technical solution in this embodiment of this application, the key management component first synthesizes the root key, uses the root key for decryption to generate the key, and then uses the key to decrypt the data, thereby enhancing key security and further enhancing security of data used by a container.

For the two data decryption manners shown in FIG. 5 and FIG. 6, the container may include a plurality of applications. To implement key isolation between applications, the tool node may separately encrypt data of different applications by using a plurality of different keys during encryption. For the foregoing case, the container can obtain corresponding different key shards for data requested by different applications.

In this case, in some possible implementations, the data ciphertext obtained by the container may include the first data ciphertext and second data ciphertext, and the obtained key shard may include the first key shard and a second key shard. The first key shard is a key shard corresponding to the first data ciphertext, and the second key shard is a key shard corresponding to the second data ciphertext. The container can synthesize, by using the key management component, the first key shard into the first key configured to decrypt the first data ciphertext to obtain the first data, and perform synthesis on the second key shard into a second key configured to decrypt the second data ciphertext to obtain second data; and apply the first data to the first application in the container, and apply the second data to the second application in the container. For specific key synthesis and data decryption methods, refer to descriptions of steps S520 and S530 or steps S620 to S640 in the foregoing methods. Details are not described herein again.

According to the technical solution in this embodiment of this application, data of different applications is synthesized and different keys are used, so that keys used by different applications in the container to decrypt the data are isolated from each other, thereby further enhancing security of the data used by the container.

The foregoing describes the data encryption and decryption methods in embodiments of this application with reference to FIG. 3 to FIG. 6. The following describes apparatus embodiments with reference to FIG. 7 to FIG. 13.

FIG. 7 is a block diagram of a structure of an apparatus 700 for managing container data according to an embodiment of this application.

As shown in FIG. 7, the apparatus 700 includes: an encryption module 710, a key management module 720, and a deployment module 730.

Specifically, the encryption module 710 is configured to encrypt first data based on a first key, to generate first data ciphertext.

Optionally, the encryption module 710 is further configured to generate the first key based on an encryption parameter specified by a user. Optionally, the encryption parameter includes at least one of the following: an encryption mode, an encryption algorithm, and a key length.

Specifically, the key management module 720 is configured to split the first key based on the key management component, to generate a first key shard.

Specifically, the deployment module 730 is configured to deploy the first data ciphertext and the first key shard to a host machine to which a target container belongs.

Optionally, the deployment module 730 is specifically configured to: code the first data ciphertext and the first key shard in a base64 coding manner; and deploy the coded first data ciphertext and the coded first key shard to the host machine to which the target container belongs.

In some possible implementations, the target container includes a first application and a second application, and the first data is data used by the first application. The encryption module 710 is further configured to encrypt second data based on a second key, to generate second data ciphertext. The key management module 720 is further configured to split the second key based on the key management component, to generate a second key shard. The deployment module 730 is further configured to deploy the second data ciphertext and the second key shard to the host machine to which the target container belongs.

In some possible implementations, the apparatus further includes an obtaining module 740, configured to: obtain a third key; and obtain the first data ciphertext and the first key shard from a management node. The key management module 720 is further configured to obtain the first data based on the key management component, the first data ciphertext, and the first key shard. The encryption module 710 is further configured to encrypt the first data based on the third key, to generate third data ciphertext.

In some possible implementations, the key management module 720 is specifically configured to: generate a first root key; encrypt the first key based on the first root key, to generate first key ciphertext; and split the first root key using the key management component, to generate the first key shard. The deployment module 730 is specifically configured to deploy the first data ciphertext, the first key ciphertext, and the first key shard to a host to which the target container belongs.

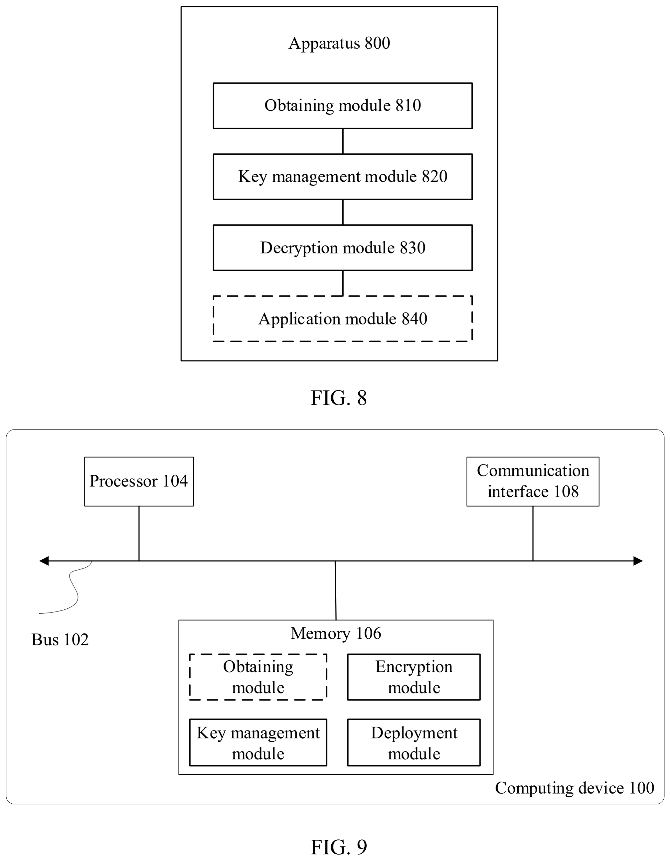

FIG. 8 is a block diagram of a structure of an apparatus 800 for managing container data according to an embodiment of this application.

As shown in FIG. 8, the apparatus 800 includes an obtaining module 810, a key management module 820, and a decryption module 830.

Specifically, the obtaining module 810 is configured to obtain first data ciphertext and a first key shard from a host machine.

Specifically, the key management module 820 is configured to perform synthesis on the first key shard based on the key management component, to generate a first key.

Specifically, the decryption module 830 is configured to decrypt the first data ciphertext based on the first key, to generate first data.

In some possible implementations, the apparatus includes a first application and a second application, and the apparatus further includes an application module 840. The obtaining module 810 is further configured to obtain second data ciphertext and a second key shard from the host machine. The key management module 820 is further configured to perform synthesis on the second key shard based on the key management component, to generate a second key. The decryption module 830 is further configured to decrypt the second data ciphertext based on the second key, to generate second data. The application module 840 is configured to apply the first data to the first application and apply the second data to the second application.

In some possible implementations, the obtaining module 810 is further configured to obtain first key ciphertext from the host machine. The key management module 820 is specifically configured to: perform synthesis on the first key shard using the key management component, to generate a first root key; and decrypt the first key ciphertext based on the first root key, to generate the first key.

The modules in the apparatus 700 and the apparatus 800 may be implemented by using software, or may be implemented by using hardware. For example, the following uses the key management module 720 as an example to describe implementations of the key management module 720. Similarly, for implementations of the encryption module 710, the deployment module 730, the obtaining module 740, the obtaining module 810, the key management module 820, the decryption module 830, and the application module 840, refer to the implementations of the key management module 720.

The module is used as an example of a software functional unit, and the key management module 720 may include code running on a computing instance. The computing instance may include at least one of a physical host (a computing device), a virtual machine, and a container. Further, there may be one or more computing instances. For example, the key management module 720 may include code running on a plurality of hosts/virtual machines/containers. It should be noted that the plurality of hosts/virtual machines/containers configured to run the code may be distributed in a same region (region), or may be distributed in different regions. Further, the plurality of hosts/virtual machines/containers configured to run the code may be distributed in a same availability zone (availability zone, AZ), or may be distributed in different AZs. Each AZ includes one data center or a plurality of data centers that are geographically close to each other. Usually, one region may include a plurality of AZs.

Similarly, the plurality of hosts/virtual machines/containers configured to run the code may be distributed in a same virtual private cloud (virtual private cloud, VPC), or may be distributed in a plurality of VPCs. Usually, one VPC is set in one region. A communication gateway needs to be set in each VPC for communication between two VPCs in a same region and cross-region communication between VPCs in different regions. The VPCs are interconnected through the communication gateway.

The module is used as an example of a hardware functional unit. The key management module 720 may include at least one computing device, for example, a server. Alternatively, the key management module 720 may be a device implemented by using an application-specific integrated circuit (application-specific integrated circuit, ASIC), a programmable logic device (programmable logic device, PLD), or the like. The PLD may be implemented by a complex programmable logic device (complex programmable logic device, CPLD), a field-programmable gate array (field-programmable gate array, FPGA), generic array logic (generic array logic, GAL), or any combination thereof.

A plurality of computing devices included in the key management module 720 may be distributed in a same region, or may be distributed in different regions. The plurality of computing devices included in the key management module 720 may be distributed in a same AZ, or may be distributed in different AZs. Similarly, the plurality of computing devices included in the key management module 720 may be distributed in a same VPC, or may be distributed in a plurality of VPCs. The plurality of computing devices may be any combination of computing devices such as a server, an ASIC, a PLD, a CPLD, an FPGA, and a GAL.

It should be noted that in other embodiments, the encryption module 710, the key management module 720, the deployment module 730, and the obtaining module 740, and the obtaining module 810, the key management module 820, the decryption module 830, and the application module 840 each may be configured to perform any step in the method for managing container data. Steps implemented by the encryption module 710, the key management module 720, the deployment module 730, and the obtaining module 740, or the obtaining module 810, the key management module 820, the decryption module 830, and the application module 840 may be specified as required. Different steps of the method for managing container data are separately implemented by the encryption module 710, the key management module 720, the deployment module 730, and the obtaining module 740, or the obtaining module 810, the key management module 820, the decryption module 830, and the application module 840, to implement all functions of the apparatus for managing container data.

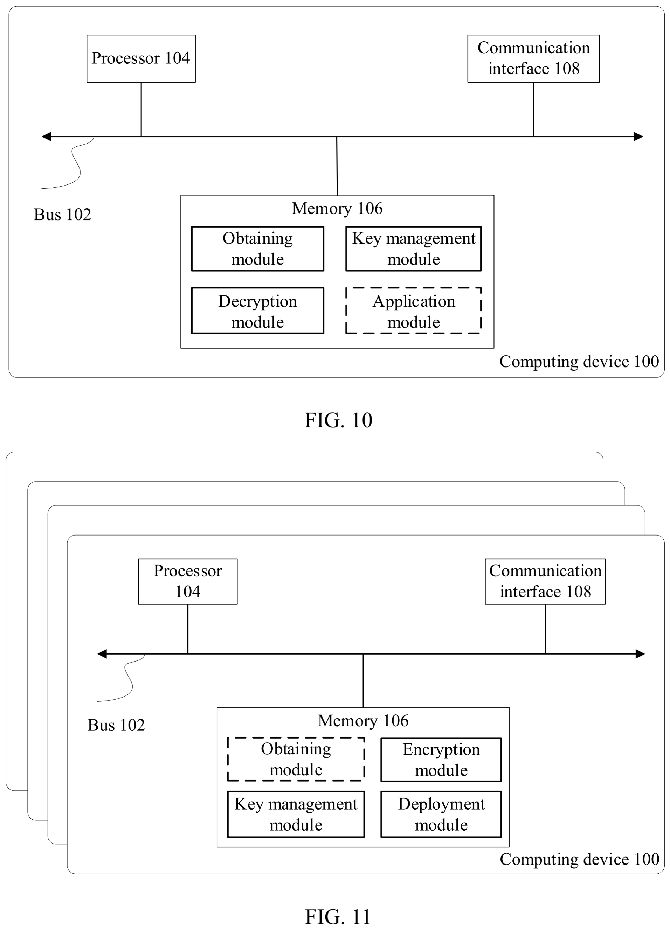

This application further provides a computing device 100. As shown in FIG. 9 and FIG. 10, the computing device 100 includes a bus 102, a processor 104, a memory 106, and a communication interface 108. The processor 104, the memory 106, and the communication interface 108 communicate with each other through the bus 102. The computing device 100 may be a server or a terminal device. It should be understood that a quantity of processors and a quantity of memories in the computing device 100 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, or the like. For ease of indication, the bus is indicated by using only one line in FIG. 10. However, it does not indicate that there is only one bus or only one type of bus. The bus 102 may include a path for transferring information between various components (for example, the memory 106, the processor 104, and the communication interface 108) of the computing device 100.

The processor 104 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code. The processor 104 executes the executable program code to separately implement functions of the obtaining module, the encryption module, the key management module, and the deployment module, or the obtaining module, the key management module, the decryption module, and the application module, to implement the method for managing container data. That is, the memory 106 stores instructions for performing the method for managing container data.

The communication interface 108 implements communication between the computing device 100 and another device or a communication network by using a transceiver module, for example, but not limited to a network interface card or a transceiver.

An embodiment of this application further provides a computing device cluster. The computing device cluster includes at least one computing device. The computing device may be a server, for example, a central server, an edge server, or a local server in a local data center. In some embodiments, the computing device may alternatively be a terminal device, for example, a desktop computer, a notebook computer, or a smartphone.

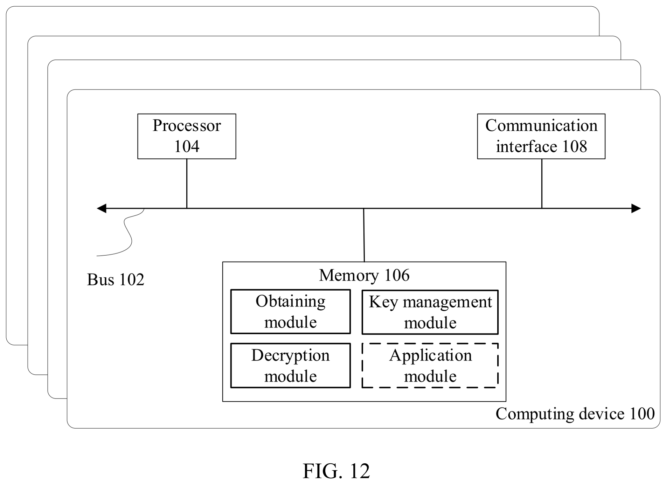

As shown in FIG. 11 or FIG. 12, the computing device cluster includes at least one computing device 100. Memories 106 in one or more computing devices 100 in the computing device cluster may store same instructions for performing the method for managing container data.

In some possible implementations, the memories 106 in the one or more computing devices 100 in the computing device cluster may alternatively store some instructions for performing the method for managing container data. In other words, a combination of one or more computing devices 100 may jointly execute instructions for performing the method for managing container data.

It should be noted that memories 106 in different computing devices 100 in the computing device cluster may store different instructions respectively used for performing some functions of the apparatus for managing container data. In other words, instructions stored in the memories 106 in different computing devices 100 may implement functions of one or more of the obtaining module, the encryption module, the key management module, and the deployment module, or the obtaining module, the key management module, the decryption module, and the application module.

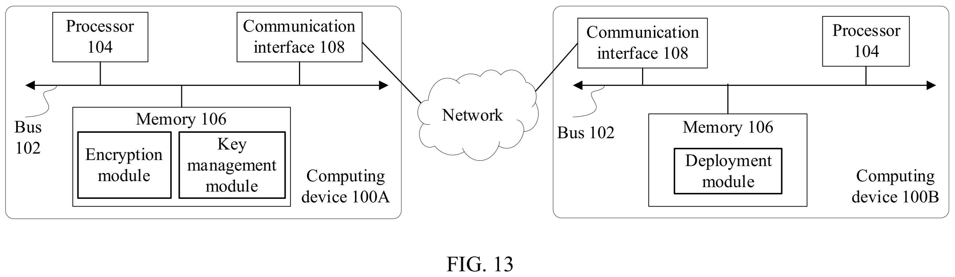

In some possible implementations, the one or more computing devices in the computing device cluster may be connected through a network. The network may be a wide area network, a local area network, or the like. FIG. 13 shows a possible implementation. As shown in FIG. 13, two computing devices 100A and 100B are connected through a network. Specifically, each computing device is connected to the network through a communication interface in the computing device. In this possible implementation, a memory 106 in the computing device 100A stores instructions for performing functions of the encryption module and the key management module. In addition, a memory 106 in the computing device 100B stores instructions for performing functions of the deployment module.

It should be understood that functions of the computing device 100A shown in FIG. 13 may alternatively be completed by a plurality of computing devices 100. Similarly, functions of the computing device 100B may alternatively be completed by a plurality of computing devices 100.

An embodiment of this application further provides a chip. The chip includes a processor and a data interface. The processor reads, through the data interface, instructions stored in a memory, to perform the method for managing container data.

An embodiment of this application further provides a computer program product including instructions. The computer program product may be software or a program product that includes instructions and that can be run on a computing device or stored in any usable medium. When the computer program product is run on at least one computing device, the at least one computing device is enabled to perform the method for managing container data.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct a computing device to perform the method for managing container data.

The technical features in the foregoing embodiments may be combined in any manner. For brevity of description, not all possible combinations of the technical features in the foregoing embodiments are described. However, provided that the combinations of the technical features do not conflict with each other, it should be considered as the scope recorded in this specification.

The foregoing embodiments are merely intended to describe the technical solutions of this application, but not intended to limit this application. Although this application is described in detail with reference to the foregoing embodiments, a person of ordinary skill in the art should understand that modifications can still be made to the technical solutions described in the foregoing embodiments or equivalent replacements can be made to some technical features thereof, without departing from the protection scope of the technical solutions in embodiments of this application.

## Claims

1. A method for managing container data, wherein the method is applied to a cloud management platform, the cloud management platform is configured to manage a plurality of container management clusters providing a container service, the container management cluster is configured to manage a target container, the cloud management platform comprises a key management component, the key management component is configured to split a key, and the method comprises:
Encrypting first data based on a first key, to generate first data ciphertext, wherein the first data is data to be deployed to the target container;
splitting the first key based on the key management component, to generate a first key shard; and
deploying the first data ciphertext and the first key shard to a host machine to which the target container belongs.

2. The method according to claim 1, wherein the target container comprises a first application and a second application, the first data is data used by the first application, and the method further comprises:
encrypting second data based on a second key, to generate second data ciphertext, wherein the second data is data used by the second application;
splitting the second key based on the key management component, to generate a second key shard; and
deploying the second data ciphertext and the second key shard to the host machine to which the target container belongs.

3. The method according to claim 1 or 2, wherein the key management component is further configured to synthesize key shards, and the method further comprises:
obtaining a third key;
obtaining the first data ciphertext and the first key shard;
obtaining the first data based on the key management component, the first data ciphertext, and the first key shard; and
encrypting the first data based on the third key, to generate third data ciphertext.

4. The method according to any one of claims 1 to 3, wherein splitting the first key based on the key management component, to generate the first key shard comprises:
generating a first root key;
encrypting the first key based on the first root key, to generate first key ciphertext; and
splitting the first root key using the key management component, to generate the first key shard; and
deploying the first data ciphertext and the first key shard to the host machine to which the target container belongs comprises:
deploying the first data ciphertext, the first key ciphertext, and the first key shard to the host machine to which the target container belongs.

5. The method according to any one of claims 1 to 4, wherein deploying the first data ciphertext and the first key shard to the host machine to which the target container belongs comprises:
coding the first data ciphertext and the first key shard in a coding scheme that represents binary data based on 64 printable characters; and
deploying the coded first data ciphertext and the coded first key shard to the host machine to which the target container belongs.

6. The method according to any one of claims 1 to 5, wherein the method further comprises:
generating the first key based on an encryption parameter specified by a user.

7. The method according to claim 6, wherein the encryption parameter comprises at least one of the following:
an encryption mode, an encryption algorithm, and a key length.

8. A method for managing container data, wherein the method is executed by a target container running on a host machine, the target container comprises a key management component, the key management component is configured to synthesize key shards, and the method comprises:
obtaining first data ciphertext and a first key shard from the host machine;
performing synthesis on the first key shard based on the key management component, to generate a first key; and
decrypting the first data ciphertext based on the first key, to generate first data.

9. The method according to claim 8, wherein the target container comprises a first application and a second application, and the method further comprises:
obtaining second data ciphertext and a second key shard from the host machine;
performing synthesis on the second key shard based on the key management component, to generate a second key;
decrypting the second data ciphertext based on the second key, to generate second data; and
applying the first data to the first application, and applying the second data to the second application.

10. The method according to claim 8 or 9, wherein the method further comprises:
obtaining first key ciphertext from the host machine; and
performing synthesis on the first key shard based on the key management component, to generate the first key comprises:
performing synthesis on the first key shard using the key management component, to generate a first root key; and
decrypting the first key ciphertext based on the first root key, to generate the first key.

11. An apparatus for managing container data, wherein the apparatus comprises a key management component, the key management component is configured to split a key, and the apparatus comprises:
an encryption module, configured to encrypt first data based on a first key, to generate first data ciphertext, wherein the first data is data to be deployed to a target container;
a key management module, configured to split the first key based on the key management component, to generate a first key shard; and
a deployment module, configured to deploy the first data ciphertext and the first key shard to a host machine to which the target container belongs.

12. The apparatus according to claim 11, wherein the target container comprises a first application and a second application, and the first data is data used by the first application;
the encryption module is further configured to encrypt second data based on a second key, to generate second data ciphertext, wherein the second data is data used by the second application;
the key management module is further configured to split the second key based on the key management component, to generate a second key shard; and
the deployment module is further configured to deploy the second data ciphertext and the second key shard to the host machine to which the target container belongs.

13. The apparatus according to claim 11 or 12, wherein the key management component is further configured to synthesize key shards, and the apparatus further comprises an obtaining module, configured to:
obtain a third key; and
obtain the first data ciphertext and the first key shard;
the key management module is further configured to obtain the first data based on the key management component, the first data ciphertext, and the first key shard; and
the encryption module is further configured to encrypt the first data based on the third key, to generate third data ciphertext.

14. The apparatus according to any one of claims 11 to 13, wherein the key management module is configured to:
generate a first root key;
encrypt the first key based on the first root key, to generate first key ciphertext; and
split the first root key using the key management component, to generate the first key shard; and
the deployment module is configured to deploy the first data ciphertext, the first key ciphertext, and the first key shard to the host machine to which the target container belongs.

15. The apparatus according to any one of claims 11 to 14, wherein the deployment module is configured to:
code the first data ciphertext and the first key shard in a coding scheme that represents binary data based on 64 printable characters; and
deploy the coded first data ciphertext and the coded first key shard to the host machine to which the target container belongs.

16. The apparatus according to any one of claims 11 to 15, wherein the encryption module is further configured to:
generate the first key based on an encryption parameter specified by a user.

17. The apparatus according to claim 16, wherein the encryption parameter comprises at least one of the following:
an encryption mode, an encryption algorithm, and a key length.

18. An apparatus for managing container data, wherein the apparatus runs on a host machine, the apparatus comprises a key management component, the key management component is configured to synthesize key shards, and the apparatus comprises:
an obtaining module, configured to obtain first data ciphertext and a first key shard from the host machine;
a key management module, configured to perform synthesis on the first key shard based on the key management component, to generate a first key; and
a decryption module, configured to decrypt the first data ciphertext based on the first key, to generate first data.

19. The apparatus according to claim 18, wherein the apparatus comprises a first application and a second application, and the apparatus further comprises an application module;
the obtaining module is further configured to obtain second data ciphertext and a second key shard from the host machine;
the key management module is further configured to perform synthesis on the second key shard based on the key management component, to generate a second key;
the decryption module is further configured to decrypt the second data ciphertext based on the second key, to generate second data; and
the application module is configured to apply the first data to the first application, and apply the second data to the second application.

20. The apparatus according to claim 18 or 19, wherein
the obtaining module is further configured to obtain first key ciphertext from the host machine; and
the key management module is configured to:
perform synthesis on the first key shard using the key management component, to generate a first root key; and
decrypt the first key ciphertext based on the first root key, to generate the first key.

21. A computing device, comprising a processor and a memory, wherein the processor is configured to execute instructions stored in the memory, so that the computing device performs the method according to any one of claims 1 to 7, or performs the method according to any one of claims 8 to 10.

22. A computing device cluster, comprising at least one computing device, wherein each computing device comprises a processor and a memory; and
the processor of the at least one computing device is configured to execute instructions stored in the memory of the at least one computing device, so that the computing device cluster performs the method according to any one of claims 1 to 7, or performs the method according to any one of claims 8 to 10.

23. A computer-readable storage medium, comprising computer program instructions, wherein when the computer instructions are executed by a computing device cluster, the computing device cluster is enabled to perform the method according to any one of claims 1 to 7, or perform the method according to any one of claims 8 to 10.
